# EUROPÄISCHE PATENTSCHRIFT

(11) **EP 1 582 947 B1**
(45) Veröffentlichungstag und Bekanntmachung des Hinweises auf die Patenterteilung: **06.05.2009**
(21) Anmeldenummer: 05005211.7
(22) Anmeldetag: 10.03.2005
(51) Int. Cl.: G05B 19/042, H04L 12/28

(54) **Ein-/Ausgabegerät der Gebäudessystemtechnik**
Input/Output device of home automation systems
Dispositif d'entrée/sortie pour réseau domestique

(30) Priorität: 03.04.2004 DE 102004016604
(43) Veröffentlichungstag der Anmeldung: 05.10.2005
(73) Patentinhaber: ABB AG, 68309 Mannheim (DE)
(72) Erfinder: Schneider, Martin, 42499 Hückeswagen (DE); Ewers, Martin Dipl.-Ing., 58239 Schwerte (DE); Quittmann, Olaf, 59846 Sundern (DE); Voss, Frank, 58579 Schalksmühle (DE); Harre, Björn Dipl.-Ing, 59192 Bergkamen (DE)
(74) Vertreter: Miller, Toivo

(56) Entgegenhaltungen:
- EP-A- 1 403 460
- DE-A1- 19 917 063
- US-A- 5 646 649
- US-A1- 2003 178 485
- US-B1- 6 570 106
- COMM-TEC: "Modero View Point Touch Panels" 24. März 2004 (2004-03-24), COMM-TEC , UHINGEN , XP002334113 Gefunden im Internet: URL:http://web.archive.org/web/20040324203 519/http://infosys.comm-tec.de/files/db_fi les/produkte/hersteller/amx/db_datenblatt/ amx_mvp-8400-7500_db01.pdf> * Seite 1, mittlere Spalte *

## Beschreibung

Die Erfindung bezieht sich auf ein Ein-/Ausgabegerät der Gebäudesystemtechnik gemäß dem Oberbegriff des Anspruchs 1. Die Erfindung kann beispielsweise als freiprogrammierbares Melde- und Bedientableau bei EIB/KNX-Systemen (European Installation Bus / KNX-Bus-Standard der Konnex-Association) verwendet werden.

Aus der Druckschrift BJE0001-0-0883/9.03/0502-D, dpi 030745 "Bedienen und Anzeigen auf direktem Weg: EIB-Sensoren für Busch Installationsbus EIB und Busch-Powernet EIB", Seite 17, ist ein Unterputz-LSD-Tableau bekannt, welches Schaltzustände und Störungsmeldungen visualisiert und derart ein Maximum an Kontrolle ermöglicht. Auf dem Bildschirm des LCD-Tableaus können beliebige Schaltflächen angezeigt und kontrolliert werden, d. h. es handelt sich um ein freiprogrammierbares Melde-und Bedientableau. Die Bedienung erfolgt schnell und übersichtlich über die Druckknöpfe am Tableau. Die Funktionen des Busch-Installationsbus EIB können so entsprechend den individuellen Bedürfnissen flexibel angepasst werden.

Da der Bus-Installationsbus EIB dezentral arbeitet, kann das Tableau, von dem aus alle Funktionen überwacht und geregelt werden, jederzeit ohne großen Aufwand integriert und in Betrieb genommen werden. Gleichzeitig übernimmt es Displayfunktionen und informiert über die aktuellen Zustände der EIB-Anlage. Auch bei einem Stromausfall bleibt die Programmierung der Bedienoberfläche erhalten.

Aus US 6,570,106 ist eine Ein-/Ausgabegerät der Gebäudesystemtechnik mit freiprogrammierbarem Melde- und Bedientableau bekannt, welches rückseitig von einem Gehäuse umgeben ist, wobei eine Frontplatte vorgesehen ist, in welcher ein Touchscreen-Element integriert ist und wobei eine Klappe an einer Grundplatte angelenkt ist, die in geöffneter Position Funktionselemente freigibt.

Aus Comm-TEC: "Modero View Point Touch Panels", 24. März 2004, COMM-TEC. Uhingen, XP002334113, Internet, URL:http://web.archive.org/web/20040324203 519/http://infosys.comm-tec.de/files/db_files/produkte/hersteller/amx/db_datenblatt/ amxmvp-8400-7500_db01 .pdf> sind interaktive Bediengeräte (Touch Panels) für bidirektionale Kommunikation mit zu steuernden Geräten bekannt, welche ein Display, externe Tasten, ein Mikrofon sowie Lautsprecher aufweisen und über Funk oder Infrarot kommunizieren. Die Touch Panels lassen sich tragen oder als Tisch- oder Wand Touch Panels nutzen.

Der Erfindung liegt die Aufgabe zugrunde, ein Ein-/Ausgabegerät der Gebäudesystemtechnik der eingangs genannten Art anzugeben, das auch in Wohnräumen einsetzbar ist.

Diese Aufgabe wird in Verbindung mit den Merkmalen des Oberbegriffes erfindungsgemäß durch die im Kennzeichen des Anspruchs 1 angegebenen Merkmale gelöst.

Die mit der Erfindung erzielbaren Vorteile bestehen insbesondere darin, dass keine offen und frei zugänglich sowie sichtbaren Tasten für die Programmierung/Bedienung oder die Aktivierung von gewünschten Anzeigen und Meldungen erforderlich sind. Das Ein-/Ausgabegerät weist ein sehr ansprechendes Design mit geschlossener, glatter Oberfläche ohne sichtbare Bedienelemente auf, was insbesondere beim Einsatz in Wohnräumen von Vorteil ist. Die Funktionselemente sind hinter einer Klappe verborgen und die Programmierung/Bedienung/Beschriftung erfolgt ausschließlich über das Touchscreen-Element. Eine Fehlbedienung / Manipulation, beispielsweise durch spielende Kinder, wird hierdurch erschwert.

Weitere Vorteile sind aus der nachstehenden Beschreibung ersichtlich.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:
- Fig.1: eine Sicht auf ein Ein-/Ausgabegerät der Gebäudesystemtechnik bei geöffneter Klappe,
- Fig. 2: eine Sicht auf ein Ein-/Ausgabegerät der Gebäudesystemtechnik bei geschlossener Klappe,
- Fig. 3: eine Sicht auf die Rückseite eines Unterputz-Einbaugehäuses eines Ein-/Ausgabegerätes der Gebäudesystemtechnik.

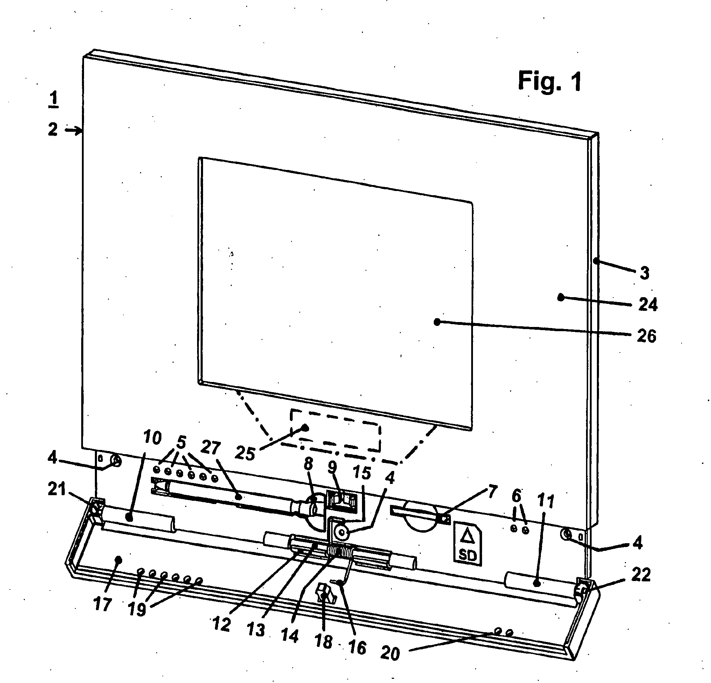

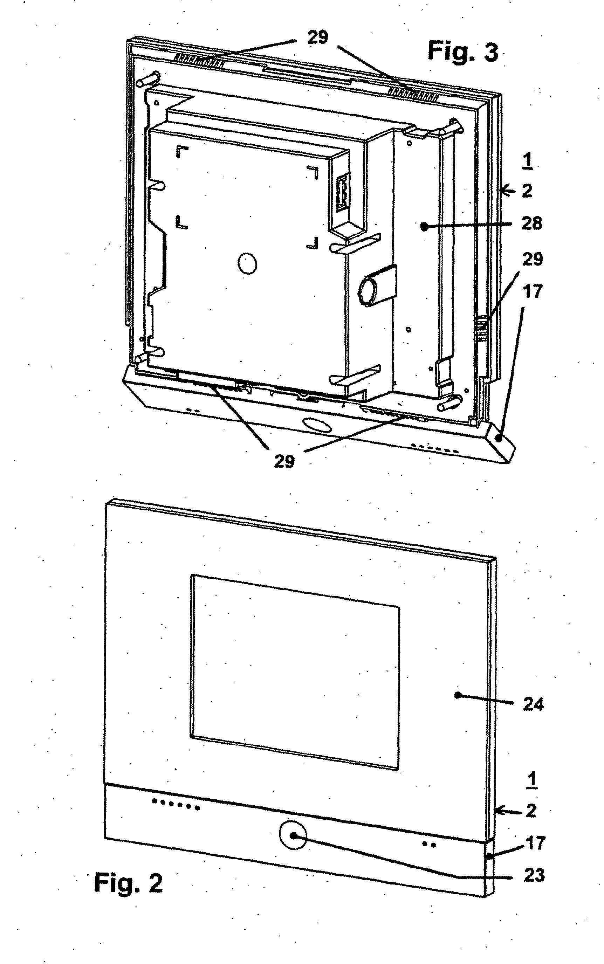

In Fig. 1 ist eine Sicht auf ein Ein-/Ausgabegerät der Gebäudesystemtechnik bei geöffneter Klappe dargestellt. Das Ein-/Ausgabegerät 1 besteht aus einer vorzugsweise rechteckförmigen Frontplatte 2 inklusive darin zentral angeordnetem Touchscreen-Element 26 und inklusive im unteren Bereich angelenkter Klappe 17, wobei die Frontplatte 2 auf ein Unterputz-Einbaugehäuse 28 (siehe Fig. 3) montierbar ist, innerhalb dessen die erforderlichen elektrischen/elektronischen Geräte (z. B. zur Ankopplung an einen Installationsbus sowie weitere nachstehend erwähnte elektrische/elektronische Baukomponenten, wie Mikrofon, Lautsprecher, Temperatursensor, Speicherkartenleser, Fernsteuersignal-Empfänger, Module (Ethemet, Video, Funk)) angeordnet sind. Dabei ist die Frontplatte 2 selbst in Form zweier Schichten aufgebaut, bestehend aus einer Grundplatte 3 aus einem für Licht undurchsichtigem Kunststoff und einer darauf befestigten Blende 24, welche aus einem für Licht undurchlässigem, jedoch für Infrarotstrahlung und Funkstrahlung durchlässigem Kunststoff besteht. Dabei erstreckt sich die Blende 24 nicht über den durch eine geschlossene Klappe 17 abgedeckten unteren Abschnitt der Grundplatte 3.

Die Grundplatte 3 weist in ihrem durch die geschlossene Klappe 17 abgedeckten unteren Abschnitt auf:
- Mehrere Befestigungsbohrungen 4, durch welche Befestigungsschrauben einführbar sind, die eine lösbare Verbindung der Frontplatte 2 mit dem Unterputz-Einbaugehäuse 28 bewirken.
- Mindestens eine, vorzugsweise jedoch mehrere Öffnungen 5, durch welche Schallwellen von einem Lautsprecher zum Außenraum gelangen, wobei der Lautsprecher im Innenraum des Unterputz-Einbaugehäuses 28 angeordnet ist.
- Mindestens eine, vorzugsweise jedoch mehrere Öffnungen 6, durch welche Schallwellen zu einem Mikrofon gelangen, welches im Innenraum des Unterputz-Einbaugehäuses 28 angeordnet ist.
- Mindestens einen Einschubschlitz 7 zur Einführung einer Speicherkarte, beispielsweise SD-Card (Secure Digital Speicherkarte), in einen im Innenraum des Unterputz-Einbaugerätes 28 angeordneten Speicherkartenleser zum Lesen / Beschriften einer gängigen Speicherkarte.
- Eine längliche Aufnahmeöffnung 8 inklusive Halterung für einen Bedienstift 27 zur Bedienung und/der Beschriftung des Touchscreen-Elementes 26.
- Mindestens eine Verriegelungseinrichtung 9, die im Zusammenwirken mit einer an der Innenseite der Klappe 17 angeordneten Arretierungsnase 18 eine Verriegelung / Entriegelung der Klappe 17 bewirkt.
- Mehrere (vorzugsweise drei) Drehgelenke 10, 11, 12, welche eine drehbewegliche Anlenkung der Klappe 17 an der Unterkante der Grundplatte 3 bewirken, und zwar ist z. B. jeweils an jeder Außenseite der Klappe 17 ein Drehgelenk 10 bzw. 11 vorgesehen, während mittig ein zusätzliches Drehgelenk 12 vorhanden ist.
- Eine Federeinrichtung, welche bei Betätigung der Verriegelungseinrichtung 9 bei geschlossenen Klappe 17 eine federnde Öffnung der Klappe 17 bewirkt, und zwar weist z. B. das mittlere Drehgelenk 12 hierzu eine Gelenkachse 13 mit umwickelter Spiralfeder 14 auf, wobei der erste Federschenkel 15 der Spiralfeder 14 gegen den durch die geschlossene Klappe 17 abgedeckten unteren Abschnitt der Grundplatte presst und der zweite Federschenkel 16 gegen die Innenseite der Klappe 17 drückt.

Die an der Unterkante der Grundplatte angelenkte Klappe 17 weist auf:
- Eine bzw. mehrere Öffnungen 19 für Schallwellen, welche bei geschlossener Klappe 17 mit den vorstehend erwähnten Öffnungen 5 der Grundplatte 3 fluchten.
- Eine bzw. mehrere Öffnungen 20 für Schallwellen, welche bei geschlossener Klappe 17 mit den vorstehend erwähnten Öffnungen 6 der Grundplatte 3 fluchten.
- Rastzapfen 21 bzw. 22 zur Gelenkachsenarretierung der äußeren Drehgelenke 10 bzw. 11. Selbstverständlich sind nicht näher bezifferte Rastnuten an der Innenseite der Klappe 17 angeformt, welche zur Aufnahme der vorstehend erwähnten Gelenkachse 13 des mittleren Drehgelenkes 12 dienen.

Im Bereich zwischen dem Touchscreen-Element 26 und dem durch die geschlossene Klappe 17 abgedeckten unteren Abschnitt weist die Grundplatte 3 eine von der Blende 24 abgedeckte strichpunktiert skizzierte Aussparung auf, hinter welcher ein im Innenraum des Unterputz-Einbaugehäuses 28 montierter, gestrichelt gekennzeichneter Fernsteuersignal-Empfänger 25, vorzugsweise ein Infrarot-Empfänger (alternativ ein Funksignal-Empfänger) positioniert ist.

Zur Inbetriebnahme und allgemein zur Programmierung und/oder Bedienung des Ein-/Ausgabegerätes 1 und/oder Beschriftung des Touchscreen-Elementes 26 sowie zur Aktivierung gewünschter Meldungen wird die Klappe 17 geöffnet und der hinter der Klappe 17 verborgene Bedienstift 27 aus seiner Aufnahmeöffnung 8 entnommen. Der Hauptanwendungszweck des Bedienstiftes 27 ist das Hinterlassen von handschriftlichen Notizen. Das Touchscreen-Element 26 weist graphisch gestaltete Schaltflächen zur Programmierung/Bedienung auf, welche wegen des zur Bedienung verwendbaren Bedienstiftes 27 vorteilhaft mit relativ feiner Struktur ausgeführt sein können. Alternativ kann auch eine Bedienmöglichkeit über Fingerdruck erfolgen. Ein Beispiel für eine Programmierung ist die Einstellung verschiedener Tagsschaltuhren und/oder Wochenschaltuhren für verschiedene Geräte - wie Beleuchtungen, z. B. Außenbeleuchtung, Rollladen, Jalousie, Heizung - des Gebäudes, welche über den Installationsbus angesteuert werden

Für die digitale Eingabe von Daten und Programmen kann eine Speicherkarte in den Einschubschlitz 7 eingeführt werden, wobei zuvor eine Öffnung der Klappe 17 erfolgt. Selbstverständlich ist es auch möglich, im Speicherkartenleser des Ein-/Ausgabegerätes 1 selbst Daten auf eine eingeführte Speicherkarte zu schreiben, was den Vorteil hat, dass diese Daten zum Zwecke der Weiterverarbeitung einem externen Rechner zugeführt werden können.

In Fig. 2 ist eine Sicht auf ein Ein-/Ausgabegerät 1 der Gebäudesystemtechnik bei geschlossener Klappe dargestellt. Die zweiteilige Ausführung der Fontplatte 2, bestehend aus Blende 24 und Klappe 17, ist gut zu erkennen. Auch bei geschlossener Klappe 17 ist auf Grund der fluchtenden Öffnungen 5 und 19 bzw. 6 und 20 die Funktionsfähigkeit von Lautsprecher und Mikrofon in vollem Umfang gegeben. Das Mikrofon dient z. B. dazu, Sprachinformationen einzuspeichern. Über den Lautsprecher können z. B. Störmeldungen akustisch gemeldet werden oder es ist ein Abhören von akustisch abgespeicherten Sprachinformationen möglich. Des gleichen ist eine Fembedienung des Ein-/Ausgabegerätes 1 bei geschlossener Klappe 17 in vollem Umfang gegeben, vorzugsweise mittels einer IR-Fembedienung, welche eine gerichtete Strahlung an einen als IR-Empfänger ausgebildeten Fernsteuersignal-Empfänger 25 abgibt, der unsichtbar hinter der lichtundurchlässigen (undurchsichtigen), aber IR-durchlässigen Blende 24 angeordnet ist. Durch die vorstehend erwähnte relativ große Aussparung in der Grundplatte 3 am Ort des Fernsteuersignal-Empfängers 25 ist aus unterschiedlichen Winkeln stets ein optimaler IR-Empfang sichergestellt.

Eine an der Frontseite der Klappe 17 zentral angeordnete Mulde 23 zeigt der bedienenden Person, an welcher Stelle vorzugsweise ein Fingerdruck notwendig ist, um die vorstehend erläuterte Entriegelung und damit Öffnung der Klappe 17 zu bewirken. Die Öffnung der Klappe 17 und deren Entriegelung/Verriegelung erfolgen durch die Verriegelungseinrichtung 9 im Zusammenwirken mit der Arretierungsnase 18 und der Spiralfeder 14 mit ihren Federschenkeln 15, 16, welche die Klappe 17 nach erfolgter Entriegelung aufdrücken.

Dabei wird die Klappe 17 über die Drehgelenke 10, 11 gleichmäßig gedämpft geöffnet (und geschlossen), wobei die Dämpfungselemente keine zusätzlich zum Gelenk zu montierenden Bauteile, sondern Bestandteile des Gelenkes selbst sind. Die Gelenkachse eines Drehgelenkes 10, 11 taucht in eine an der Unterkante der Grundplatte 3 einstückig angeformte, eine zähe Substanz (beispielsweise ein zähes Fett) enthaltende Gelenkhülse ein und weist einen vorzugsweise quadratischen Kopf auf, welcher aus der Hülse ragt und derart in eine Nut der Klappe 17 eingreift, dass bei Drehbewegung der Klappe 17 gleichzeitig eine synchrone Drehbewegung der Gelenkachse erzwungen wird. Die zähe Substanz innerhalb der Gelenkhülse dämpft die Drehbewegung der Gelenkachse und damit der Klappe 17.

In Fig. 3 ist eine Sicht auf die Rückseite eines Unterputz-Einbaugehäuses 28 eines Ein-/Ausgabegerätes 1 der Gebäudesystemtechnik dargestellt. Selbstverständlich ist das Unterputz-Einbaugehäuse 28 mit entsprechenden Bohrungen versehen, um elektrische Leitungen des Bussystems und gegebenenfalls elektrische Leitungen zur Energieversorgung einführen zu können, des gleichen können auch entsprechende Steckanschlussverbindungen vorgesehen sein. Die Außenkonturen der Frontplatte 2 mit Klappe 17 ragen über die Außenkanten des Unterputz-Einbaugehäuses 28. Das Unterputz-Einbaugehäuse 28 weist in einem umlaufenden schmalen Randbereich, welcher auch im eingebauten Zustand über die Montagewand ragt, mehrere Öffnungen 29 (insbesondere im oberen und unteren Randbereich) auf, durch welche Raumluft in den Innenraum des Gehäuses zu einem Temperatursensor gelangt, welcher im Innenraum des Unterputz-Einbaugehäuses 28 angeordnet ist.

Vorzugsweise weist das Unterputz-Einbaugehäuse 28 vielfältige Aufnahmemöglichkeiten (Slots) für Module (Ethernet, Video, Funk) auf.

### Bezugszeichenliste:

- 1: Ein-/Ausgabegerät der Gebäudesystemtechnik
- 2: Frontplatte
- 3: Grundplatte
- 4: Befestigungsbohrungen
- 5: Öffnungen für Lautsprecher
- 6: Öffnungen für Mikrofon
- 7: Einschubschlitz für Speicherkarte
- 8: Aufnahmeöffnung für Bedienstift
- 9: Verriegelungseinrichtung
- 10: Drehgelenk mit Dämpfungselement
- 11: Drehgelenk mit Dämpfungselement
- 12: Drehgelenk mit Federelement
- 13: Gelenkachse
- 14: Spiralfeder
- 15: erster Federschenkel
- 16: zweiter Federschenkel
- 17: Klappe
- 18: Arretierungsnase
- 19: Öffnungen für Lautsprecher
- 20: Öffnungen für Mikrofon
- 21: Rastzapfen zur Gelenkachsenarretierung
- 22: Rastzapfen zur Gelenkachsenarretierung
- 23: Mulde
- 24: Blende (lichtundurchlässig, IR-durchlässig)
- 25: Fernsteuersignal-Empfänger
- 26: Touchscreen-Element
- 27: Bedienstift für Touchscreen-Element
- 28: Unterputz-Einbaugehäuse
- 29: Öffnungen für Raumluft (Temperatursensor)

## Patentansprüche

1. Ein-/Ausgabegerät der Gebäudesystemtechnik mit einem freiprogrammierbaren Melde- und Bedientableau, welches rückseitig von einem Gehäuse umgeben ist, wobei eine Frontplatte (2) vorgesehen ist, in welcher ein Touchscreen-Element (26) integriert ist, und wobei eine Klappe (17) an einer Grundplatte (3) angelenkt ist, die in geöffneter Position Funktionselemente freigibt **dadurch gekennzeichnet,**
- **dass** die Frontplatte (2) in Form zweier Schichten aufgebaut ist, bestehend aus der Grundplatte (3) aus einem für Licht undurchsichtigen Kunststoff und einer darauf befestigten Blende (24), welche aus einem für Licht undurchlässigem, jedoch für Infrarotstrahlung und Funkstrahlung durchlässigem Kunststoff besteht,
- **dass** sich die Blende (24) nicht über den durch die geschlossene Klappe (17) abgedeckten Abschnitt der Grundplatte (3) erstreckt,
- **dass** hinter der Klappe (17) eine Aufnahmeöffnung (8) inklusive Halterung für einen Bedienstift (27) zur Bedienung und/oder Beschriftung des Touchscreen-Elementes (26) angeordnet ist und
- **dass** ein im Innenraum des Gehäuses montierter Fernsteuersignal-Empfänger (25) unsichtbar hinter der Frontplatte (2) angeordnet ist, wozu die Grundplatte (3) eine von der Blende (24) abgedeckte Aussparung aufweist.

2. Ein-/Ausgabegerät nach Anspruch 1, **dadurch gekennzeichnet, dass** ein IR-Empfänger eingesetzt ist.

3. Ein-/Ausgabegerät nach Anspruch 1, **dadurch gekennzeichnet, dass** ein Funk-Empfänger eingesetzt ist.

4. Ein-/Ausgabegerät nach einem der vorstehenden Ansprüche, **dadurch gekennzeichnet, dass** die Frontplatte (2) mindestens eine Öffnung (6, 20) aufweist, durch welche sowohl bei geöffneter als auch bei geschlossener Klappe (17) Schallwellen vom Außenraum zu einem Mikrofon gelangen, welches im Innenraum des Gehäuses angeordnet ist.

5. Ein-/Ausgabegerät nach einem der vorstehenden Ansprüche, **dadurch gekennzeichnet, dass** die Frontplatte (2) mindestens eine Öffnung (5, 19) aufweist, durch welche sowohl bei geöffneter als auch bei geschlossener Klappe (17) Schallwellen von einem im Innenraum des Gehäuses angeordneten Lautsprecher zum Außenraum gelangen.

6. Ein-/Ausgabegerät nach einem der vorstehenden Ansprüche, **dadurch gekennzeichnet, dass** die Frontplatte (2) oder das Gehäuse mehrere Öffnungen (29) aufweist, durch welche sowohl bei geöffneter als auch bei geschlossener Klappe (17) Außenluft zu einem Temperatursensor gelangt, welcher im Innenraum des Gehäuses angeordnet ist.

7. Ein-/Ausgabegerät nach einem der vorstehenden Ansprüche, **dadurch gekennzeichnet, dass** die Frontplatte (2) hinter der Klappe (17) einen Einschubschlitz (7) zur Einführung einer Speicherkarte in einen im Innenraum des Gehäuses angeordneten Speicherkartenleser zum Lesen / Beschriften einer gängigen Speicherkarte aufweist.

8. Ein-/Ausgabegerät nach einem der vorstehenden Ansprüche, **dadurch gekennzeichnet, dass** die Verriegelung/Entriegelung der Klappe (17) mittels einer mit einem Federelement beaufschlagten Verriegelungseinrichtung (9) erfolgt.

9. Ein-/Ausgabegerät nach einem der vorstehenden Ansprüche, **dadurch gekennzeichnet, dass** die Anlenkung der Klappe über mindestens zwei äußere Drehgelenke (10, 11) erfolgt, welche integrierte Dämpfungselemente aufweisen.

10. Ein-/Ausgabegerät nach den Ansprüchen 8 und 9, **dadurch gekennzeichnet, dass** mittig zwischen den äußeren Drehgelenken (10, 11) ein zusätzliches Drehgelenk (12) vorhanden ist, dessen Gelenkachse mit einer Spiralfeder (14) umwickelt ist, welche eine federnde Öffnung der Klappe (17) bewirkt.

## Claims

1. An input/output device of electrical system technology for home and buildings, comprising a freely programmable signalling and operator control panel which is enclosed on the rear side by a housing, with a front panel (2) being provided in which a touchscreen element (26) is integrated, and with a flap (17) being linked to a base plate (3) which releases the functional elements in the opened position, **characterized in that**
- the front panel (2) is arranged in the form of two layers, consisting of the base plate (3) made from a plastic material which is non-transparent for light and a frame (24) which is fastened thereto and consists of a plastic material which is non-transparent for light but transparent for infrared radiation and radio radiation;
- the frame (24) does not extend over the section of the base plate (3) covered by the closed flap (17);
- a receiving opening (8) is arranged behind the flap (17), including a fixture for a stylus (27) for operating and/or labelling the touchscreen element (26), and
- a remote-control signal receiver (25) mounted in the interior space of the housing is arranged invisibly behind the front panel (2), for which purpose the base plate (3) comprises a recess covered by the frame (24).

2. An input/output device according to claim 1, **characterized in that** an infrared receiver has been inserted.

3. An input/output device according to claim 1, **characterized in that** a radio receiver has been inserted.

4. An input/output device according to one of the preceding claims, **characterized in that** the front panel (2) comprises at least one opening (6, 20) through which sonic waves reach from the outside space to a microphone when the flap (17) is opened and closed, which microphone is arranged in the interior space of the housing.

5. An input/output device according to one of the preceding claims, **characterized in that** the front panel (2) comprises at least one opening (5, 19) through which sonic waves reach the outside space from a loudspeaker when the flap (17) is opened and closed, which loudspeaker is arranged in the interior space of the housing.

6. An input/output device according to one of the preceding claims, **characterized in that** the front panel (2) or the housing comprises several openings (29) through which outside air reaches a temperature sensor when the flap (17) is opened and closed, which sensor is arranged in the interior space of the housing.

7. An input/output device according to one of the preceding claims, **characterized in that** the front panel (2) comprises an insertion slot (7) behind the flap (17) for inserting a memory card into a memory card reader arranged in the interior space of the housing for reading/writing a conventional memory card.

8. An input/output device according to one of the preceding claims, **characterized in that** the locking/unlocking of the flap (17) occurs by means of a locking device (9) loaded with a spring element.

9. An input/output device according to one of the preceding claims, **characterized in that** linkage of the flap occurs through at least two external hinges (10, 11) which comprise integrated damping elements.

10. An input/output device according to the claims 8 and 9, **characterized in that** an additional hinge (12) is present centrally between the outer hinges (10, 11), with a coil spring (14) being wound about its hinge axis which causes a resilient opening of the flap (17).

## Revendications

1. Appareil d'entrée/sortie pour systèmes domotiques avec un tableau de signalisation et de commande programmable à volonté, qui est entouré sur sa face arrière par un boîtier, dans lequel est prévu un panneau avant (2) dans lequel est intégré un élément à écran tactile (26) et dans lequel un volet (17) est articulé sur une plaque de base (3), qui donne accès aux éléments fonctionnels dans la position ouverte, **caractérisé en ce que**
- le panneau avant (2) est construit sous la forme de deux couches, composées de la plaque de base (3) faite d'un matériau opaque à la lumière et d'un obturateur (24) fixé dessus qui est fait d'une matière plastique opaque à la lumière mais transparente aux infrarouges et au rayonnement radio,
- l'obturateur (24) ne s'étend pas au-delà de la partie de la plaque de base (3) recouverte par le volet (17) fermé,
- une ouverture de logement (8) est disposée derrière le volet (17) avec une fixation pour un crayon de commande (27) destiné à commander et/ou écrire sur l'élément à écran tactile (26), et
- **en ce qu'**il est prévu un récepteur de signaux de commande à distance (25) disposé à l'intérieur du boîtier de façon à être invisible derrière le panneau avant (2), la plaque de base (3) présentant pour cela une ouverture recouverte par l'obturateur (24).

2. Appareil d'entrée/sortie selon la revendication 1, **caractérisé en ce que** l'on utilise un récepteur à infrarouges.

3. Appareil d'entrée/sortie selon la revendication 1, **caractérisé en ce que** l'on utilise un récepteur de radio.

4. Appareil d'entrée/sortie selon l'une des revendications précédentes, **caractérisé en ce que** le panneau avant (2) présente au moins une ouverture (6, 20) à travers laquelle des ondes sonores parviennent de l'espace extérieur jusqu'à un microphone disposé à l'intérieur du boîtier, aussi bien quand le volet (17) est ouvert que quand il est fermé.

5. Appareil d'entrée/sortie selon l'une des revendications précédentes, **caractérisé en ce que** le panneau avant (2) présente au moins une ouverture (5, 19) à travers laquelle des ondes sonores parviennent d'un haut-parleur disposé à l'intérieur du boîtier à l'espace extérieur, aussi bien quand le volet (17) est ouvert que quand il est fermé.

6. Appareil d'entrée/sortie selon l'une des revendications précédentes, **caractérisé en ce que** le panneau avant (2) ou le boîtier présente plusieurs ouvertures (29) à travers lesquelles de l'air extérieur parvient jusqu'à une sonde de température disposée à l'intérieur du boîtier, aussi bien quand le volet (17) est ouvert que quand il est fermé.

7. Appareil d'entrée/sortie selon l'une des revendications précédentes, **caractérisé en ce que** le panneau avant (2) comporte sous le volet (17) une fente d'insertion (7) pour l'introduction d'une carte à mémoire dans un lecteur de cartes disposé à l'intérieur du boîtier pour lire et écrire une carte à mémoire usuelle.

8. Appareil d'entrée/sortie selon l'une des revendications précédentes, **caractérisé en ce que** le verrouillage et le déverrouillage du volet (17) sont réalisés par un dispositif de verrouillage (9) contraint par un élément de ressort.

9. Appareil d'entrée/sortie selon l'une des revendications précédentes, **caractérisé en ce que** l'articulation du volet est réalisée par au moins deux articulations pivotantes extérieures (10, 11), qui possèdent des éléments d'amortissement intégrés.

10. Appareil d'entrée/sortie selon les revendications 8 et 9, **caractérisé en ce qu'**il est prévu au milieu entre les articulations pivotantes extérieures (10, 11) une articulation pivotante supplémentaire (12) dont l'axe d'articulation est entouré d'un ressort hélicoïdal (14) réalisant une ouverture élastique du volet (17).
